# EUROPEAN PATENT APPLICATION

(11) **EP 4 395 104 A1**
(43) Date of publication of application: **03.07.2024**
(21) Application number: 21957921.6
(22) Date of filing: 24.09.2021
(51) Int. Cl.: H02J 7/00

(54) **METHOD FOR DETECTING PLUG HANGING STATE OF POWER SUPPLY DEVICE, AND RELATED APPARATUS**

(71) Applicant: Huawei Technologies Co., Ltd., Shenzhen, Guangdong 518129 (CN)
(72) Inventor: LI, Dekui, Shenzhen, Guangdong 518129 (CN)
(74) Representative: Gill Jennings & Every LLP
(86) International application number: PCT/CN2021/120442
(87) International publication number: WO 2023/044796

(57) **Abstract**

This application discloses a method for detecting a charger placing status of a power supply device and a related apparatus in the field of electric vehicle technologies. In the technical solution provided in this application, a charger of the power supply device is inserted in a charging socket of the power supply device to implement charger placing processing. It is determined, based on that an obtained current first voltage value of a control pilot circuit of the charger of the power supply device is equal to a rated voltage value of the control pilot circuit of the charger of the power supply device and an obtained current second voltage value of a control pilot circuit of the charging socket of the power supply device is equal to a rated voltage value of the control pilot circuit of the charging socket of the power supply device, that the charging socket of the power supply device is in a charger-inserted state and a charger that is inserted in the charging socket of the power supply device is the charger of the power supply device. This reduces costs of the power supply device and improves accuracy of detecting the charger placing status of the power supply device.

## Description

### TECHNICAL FIELD

This application relates to the field of electric vehicle technologies, and in particular, to a method for detecting a charger placing status of a power supply device and a related apparatus.

### BACKGROUND

As electric vehicles become increasingly popular, an increasing quantity of charging devices provide energy for the electric vehicles. A mobile charging vehicle is favored by the market and users because of flexible mobility, an on-call feature, a return-after-charging feature, and the like, which greatly alleviates a charging problem of the electric vehicle and greatly improves user experience.

The mobile charging vehicle includes a fast/slow charging socket for charging the mobile charging vehicle and a fast/slow charger for charging an external vehicle. When an external charging device charges the mobile charging vehicle, a charger of the external charging device is connected to the fast/slow charging socket of the mobile charging vehicle. The external charging device includes a charging pile. When the mobile charging vehicle charges the external vehicle, the corresponding charger of the mobile charging vehicle only needs to be connected to a charging socket of the external vehicle. When the mobile charging vehicle is neither charged by the external charging device nor charges the external vehicle, the fast/slow charger of the mobile charging vehicle needs to be placed on the mobile charging vehicle, to prevent a head of the fast/slow charger of the mobile charging vehicle from being dragged, rolled, or worn because the head is randomly placed on the ground. In the conventional technology, one or more charger placing apparatuses are installed on the mobile charging vehicle to implement charger placing of the fast/slow charger of the mobile charging vehicle, which increases costs of the mobile charging vehicle.

Therefore, how to reduce costs of the mobile charging vehicle by changing a manner of placing the fast/slow charger of the mobile charging vehicle and improve accuracy of detecting a charger placing status of the mobile charging vehicle becomes a problem to be resolved urgently.

### SUMMARY

This application provides a method for detecting a charger placing status of a power supply device and a related apparatus, to reduce costs of the power supply device and improve accuracy of detecting the charger placing status of the power supply device.

According to a first aspect, this application provides a method for detecting a charger placing status of a power supply device, where the power supply device includes a first charger and a first charging socket. The method includes: obtaining a first voltage value of a first detection point in a control pilot circuit of the first charger; obtaining a second voltage value of a second detection point in a control pilot circuit of the first charging socket; and determining a status of the first charger and a status of the first charging socket based on the first voltage value and the second voltage value.

In this method, the charger of the power supply device is inserted in the charging socket of the power supply device to implement charger placing processing. In comparison with a case in which a charger placing device is additionally disposed on the power supply device to implement charging charger placing, this reduces costs of the power supply device, and reduces a size of the power supply device.

According to the charger placing method provided in this application, a charger of another power supply device may be inserted in the charging socket of the power supply device to charge the power supply device. The charger of the power supply device may be inserted in a charging socket of an electric vehicle or another device that needs to be charged, to charge the electric vehicle or the another device that needs to be charged. When the power supply device is neither charged by the another power supply device nor charges the electric vehicle or the another device that needs to be charged, the charger of the power supply device is inserted in the charging socket of the power supply device. In addition, the first voltage value of the first detection point in the control pilot circuit of the charger of the power supply device and the second voltage value of the second detection point in the control pilot circuit of the charging socket of the power supply device are obtained, and the status of the charger and the status of the charging socket are determined based on the first voltage value and the second voltage value. It improves accuracy of detecting the charger placing status of the power supply device.

In a possible implementation, the method further includes: when the first voltage value is equal to a first voltage threshold, and the second voltage value is equal to a second voltage threshold, determining that a charger is inserted in the first charging socket and the charger that is inserted in the first charging socket is the first charger.

In this implementation, that the first voltage value is equal to the first voltage threshold, and the second voltage value is equal to the second voltage threshold is used as a determining condition, to determine that a charger is inserted in the charging socket of the power supply device and the charger that is inserted in the charging socket of the power supply device is the charger of the power supply device. It improves the accuracy of detecting the charger placing status of the power supply device.

In a possible implementation, the method further includes: when the first voltage value is equal to a third voltage threshold, and the second voltage value is equal to the second voltage threshold, determining that a charger is inserted in the first charging socket and the charger that is inserted in the first charging socket is a charger of a device that charges the power supply device.

In this implementation, that the first voltage value is equal to the third voltage threshold, and the second voltage value is equal to the second voltage threshold is used as a determining condition, to determine that a charger is inserted in the charging socket of the power supply device and the charger that is inserted in the charging socket is the charger of the device that charges the power supply device. It improves the accuracy of detecting the charger placing status of the power supply device.

In a possible implementation, the method further includes: when the first voltage value is equal to the third voltage threshold, and the second voltage value is equal to the third voltage threshold, determining that no charger is inserted in the charging socket.

In this implementation, that the first voltage value is equal to the third voltage threshold, and the second voltage value is equal to the third voltage threshold is used as a determining condition, to determine that no charger is inserted in the charging socket of the power supply device. It improves the accuracy of detecting the charger placing status of the power supply device.

In a possible implementation, the method further includes: obtaining the first voltage value based on a sampling circuit of a fast charging interface detection point 1; and obtaining the second voltage value based on a sampling circuit of a fast charging interface detection point 2.

In a possible implementation, the first voltage threshold is a rated voltage value of a control pilot circuit of a fast charger, and the second voltage threshold is a rated voltage value of a control pilot circuit of a fast charging socket.

In a possible implementation, the method further includes: obtaining the first voltage value based on a sampling circuit of a slow charging interface detection point 1; and obtaining the second voltage value based on a sampling circuit of a slow charging interface detection point 2.

In a possible implementation, the first voltage threshold is a rated voltage value of a control pilot circuit of a slow charger, and the second voltage threshold is a rated voltage value of a control pilot circuit of a slow charging socket.

In a possible implementation, the method further includes: When a charger is inserted in the first charging socket and the charger that is inserted in the first charging socket is the first charger, the power supply device is in a sleep state.

In a possible implementation, the method further includes: When a charger is inserted in the first charging socket and the charger that is inserted in the first charging socket is the charger of the device that charges the power supply device, the power supply device is in a charged state.

According to a second aspect, this application provides an apparatus for detecting a charger placing status of a power supply device. The apparatus includes an obtaining module and a determining module. The obtaining module is configured to obtain a first voltage value of a control pilot circuit of the first charger. The obtaining module is further configured to obtain a second voltage value of a control pilot circuit of the first charging socket. The determining module is configured to determine a status of the first charger and a status of the first charging socket based on the first voltage value and the second voltage value.

In a possible implementation, the determining module is specifically configured to: when the first voltage value is equal to a first voltage threshold, and the second voltage value is equal to a second voltage threshold, determine that a charger is inserted in the first charging socket and the charger that is inserted in the first charging socket is the first charger.

In a possible implementation, the determining module is specifically configured to: when the first voltage value is equal to a third voltage threshold, and the second voltage value is equal to the second voltage threshold, determine that a charger is inserted in the first charging socket and the charger that is inserted in the first charging socket is a charger of a device that charges the power supply device.

In a possible implementation, the determining module is specifically configured to: when the first voltage value is equal to the third voltage threshold, and the second voltage value is equal to the third voltage threshold, determine that no charger is inserted in the first charging socket.

In a possible implementation, the obtaining module is specifically configured to: obtain the first voltage value based on a sampling circuit of a fast charging interface detection point 1; and obtain the second voltage value based on a sampling circuit of a fast charging interface detection point 2.

In a possible implementation, the first voltage threshold is a rated voltage value of a control pilot circuit of a fast charger, and the second voltage threshold is a rated voltage value of a control pilot circuit of a fast charging socket.

In a possible implementation, the obtaining module is specifically configured to: obtain the first voltage value based on a sampling circuit of a slow charging interface detection point 1; and obtain the second voltage value based on a sampling circuit of a slow charging interface detection point 2.

In a possible implementation, the first voltage threshold is a rated voltage value of a control pilot circuit of a slow charger, and the second voltage threshold is a rated voltage value of a control pilot circuit of a slow charging socket.

In a possible implementation, when a charger is inserted in the first charging socket and the charger that is inserted in the first charging socket is the first charger, the power supply device is in a sleep state.

In a possible implementation, when a charger is inserted in the first charging socket and the charger that is inserted in the first charging socket is the charger of the device that charges the power supply device, the power supply device is in a charged state.

According to a third aspect, this application provides an apparatus for detecting a charger placing status of a power supply device. The apparatus may include a processor coupled to a memory. The memory is configured to store program code, and the processor is configured to execute the program code in the memory, to implement the method according to any one of the first aspect or the implementations of the first aspect.

Optionally, the apparatus may further include the memory.

According to a fourth aspect, this application provides a power supply device, including a charger, a charging socket, and the detection apparatus according to any one of the second aspect or the possible implementations of the second aspect. The power supply device may be a mobile charging vehicle.

According to a fifth aspect, this application provides a chip, including at least one processor and a communication interface, where the communication interface and the at least one processor are interconnected by using a line, and the at least one processor is configured to run a computer program or instructions, to perform the method according to any one of the first aspect or the possible implementations of the first aspect.

According to a sixth aspect, this application provides a computer-readable medium. The computer-readable medium stores device-executable program code, and the program code includes instructions used to perform the method according to any one of the first aspect or the possible implementations of the first aspect.

According to a seventh aspect, this application provides a computer program product including instructions. When the computer program product is run on a computer, the computer is enabled to perform the method in any one of the first aspect or the possible implementations of the first aspect.

### BRIEF DESCRIPTION OF DRAWINGS

FIG. 1 is a schematic diagram of a structure of a power supply device according to an embodiment of this application;
FIG. 2 is a schematic diagram of a system architecture of a power supply device according to an embodiment of this application;
FIG. 3 is a schematic diagram of a control pilot circuit according to an embodiment of this application;
FIG. 4 is a schematic diagram of another control pilot circuit according to an embodiment of this application;
FIG. 5 is a schematic diagram of a sampling circuit of a fast charging interface detection point 1 according to an embodiment of this application;
FIG. 6 is a schematic diagram of a sampling circuit of a fast charging interface detection point 2 according to an embodiment of this application;
FIG. 7 is a schematic flowchart of a method for detecting a charger placing status of a power supply device according to an embodiment of this application;
FIG. 8 is a schematic diagram of a system architecture of another power supply device according to an embodiment of this application;
FIG. 9 is a schematic flowchart of a method for detecting a charger placing status of a fast charging socket of a power supply device according to an embodiment of this application;
FIG. 10 is a schematic flowchart of a method for detecting a charger placing status of a slow charging socket of a power supply device according to an embodiment of this application;
FIG. 11 is a schematic diagram of a structure of an apparatus for detecting a charger placing status of a power supply device according to an embodiment of this application; and
FIG. 12 is a schematic diagram of a structure of an apparatus for detecting a charger placing status of a power supply device according to another embodiment of this application.

### DESCRIPTION OF EMBODIMENTS

The following describes technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

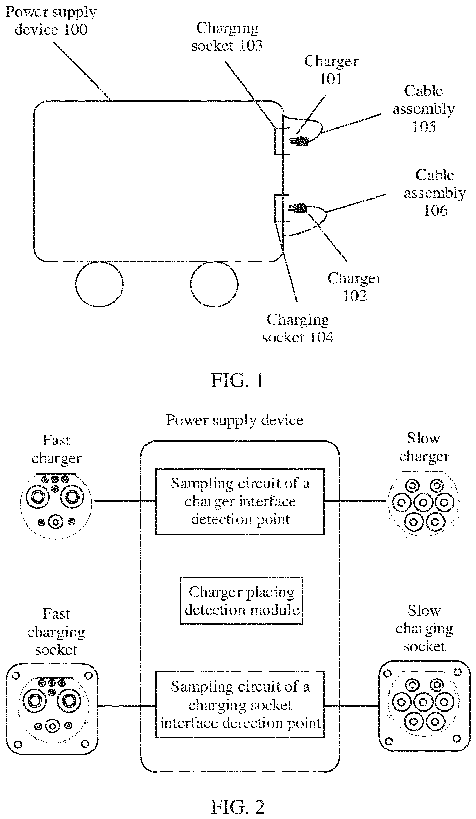

FIG. 1 is a schematic diagram of a structure of a power supply device according to an embodiment of this application. As shown in FIG. 1, a power supply device 100 includes a charger 101, a charger 102, a charging socket 103, a charging socket 104, a cable assembly 105, and a cable assembly 106. The charger 101 matches the charging socket 103, and the charger 102 matches the charging socket 104.

The power supply device 100 is a device or a combined device that provides a dedicated function to supplement electric energy to an electric energy-driving device (for example, an electric vehicle) for a purpose of charging. For example, the power supply device 100 includes a mobile charging vehicle, a charging pile, and the like.

The charger 101 and the charger 102 are configured to charge the electric energy-driving device by being inserted into charging sockets of the electric energy-driving device. The charger 101 and the charger 102 may be fast chargers or slow chargers.

The charging socket 103 and the charging socket 104 are not only configured to be inserted by chargers of another power supply device to charge the power supply device 100, but also may correspondingly implement charger placing by being placed the charger 101 and the charger 102. If the charger 101 is a fast charger, the charging socket 103 is a fast charging socket. If the charger 101 is a slow charger, the charging socket 103 is a slow charging socket. Similarly, if the charger 102 is a fast charger, the charging socket 104 is a fast charging socket. If the charger 102 is a slow charger, the charging socket 104 is a slow charging socket.

The cable assembly 105 is a flexible cable fastened to the power supply device 100, and is configured to connect the charger 101 to the power supply device 100.

The cable assembly 106 is a flexible cable fastened to the power supply device 100, and is configured to connect the charger 102 to the power supply device 100.

It may be understood that the schematic diagram of the structure of the power supply device shown in FIG. 1 is merely an example. In some other embodiments of this application, the power supply device 100 may include more or fewer components than those shown in the figure, combine some components, split some components, or have different component arrangements. For example, the power supply device 100 may include only one charger and a charging socket that matches the charger. The charger may be a fast charger or a slow charger. Correspondingly, the charging socket that matches the charger may be a fast charging socket or a slow charging socket. This is not limited in this application. For another example, the power supply device 100 may include a plurality of chargers and a plurality of charging sockets that match the plurality of chargers. The plurality of chargers may all be fast chargers or slow chargers, or may include fast chargers and slow chargers. Correspondingly, the plurality of charging sockets may all be fast charging sockets or slow charging sockets, or may include fast charging sockets and slow charging sockets. A quantity of chargers may be equal to or not equal to a quantity of charging sockets. For another example, the power supply device may include a plurality of chargers and one charging socket. The plurality of chargers may all be fast chargers, or may all be slow chargers, or may include fast chargers and slow chargers. The one charging socket may be a fast charging socket. This is not limited in this application.

For the power supply device provided in this application, when another power supply device charges the power supply device, a charger of the another power supply device needs to be inserted into a charging socket of the power supply device. In addition, when the power supply device does not charge another electric energy-driving device, and is not charged by another power supply device, a charger of the power supply device needs to be inserted into a corresponding charging socket of the power supply device. In the foregoing two different cases, the charging socket of the power supply device is in a state in which a charger is inserted in the charging socket. In this case, the power supply device needs to determine whether the charger inserted into the charging socket of the power supply device is a charger of another power supply device or the charger of the power supply device, so that the power supply device can determine an operation to be performed in a next step. For example, if the charger inserted into the charging socket of the power supply device is the charger of the another power supply device, the power supply device performs an operation of charging the power supply device; or if the charger inserted into the charging socket of the power supply device is the charger of the power supply device, the power supply device performs an operation of entering a low power consumption state.

An existing method for detecting a charger placing status of a power supply device is as follows: obtaining a current input voltage value of a charging socket of the power supply device, determining whether the input voltage value is equal to a rated voltage value of a control pilot circuit of the charging socket of the power supply device, and when the input voltage value is equal to the rated voltage value, determining that a charger is inserted in the charging socket of the power supply device. However, regardless of whether the charger inserted into the charging socket of the power supply device is a charger of another power supply device or a charger of the power supply device, the current input voltage value of the charging socket is equal to the rated voltage value of the control pilot circuit of the charging socket. Consequently, it cannot be accurately determined, in the existing method for detecting a charger placing status of a power supply device, whether the charger inserted into the charging socket of the power supply device is the charger of another power supply device or the charger of the power supply device. As a result, an operation to be performed by the power supply device in a next step cannot be accurately determined. In this case, security of the power supply device is low, and resources are wasted.

On the basis of the foregoing problem, this application proposes a method for detecting a charger placing status of a power supply device. A specific method is as follows: obtaining a first voltage value of a first detection point in a control pilot circuit of a charger of the power supply device and a second voltage value of a second detection point in a control pilot circuit of a charging socket; and when the first voltage value is equal to a first voltage threshold, and the second voltage value is equal to a second voltage threshold, determining that a charger is inserted in the charging socket and the charger that is inserted in the charging socket is the charger of the power supply device; when the first voltage value is equal to a third voltage threshold, and the second voltage value is equal to the second voltage threshold, determining that a charger is inserted in the charging socket and the charger that is inserted in the charging socket is a charger of a device that charges the power supply device; or when the first voltage value is equal to the third voltage threshold, and the second voltage value is equal to the third voltage threshold, determining that no charger is inserted in the charging socket.

According to the method for detecting a charger placing status of a power supply device provided in this application, it may be determined whether a charger is inserted in the charging socket of the power supply device, and it may be further determined whether the charger that is inserted in the charging socket is a charger of another power supply device or the charger of the power supply device. This improves accuracy of detecting the charger placing status of the power supply device.

FIG. 2 is a schematic diagram of a system architecture of a power supply device according to an embodiment of this application. As shown in FIG. 2, the power supply device includes a sampling circuit of a charger interface detection point, a sampling circuit of a charging socket interface detection point, and a charger placing detection module.

The sampling circuit of the charger interface detection point is configured to collect a voltage value of a control pilot circuit of a charger of the power supply device. The sampling circuit of the charger interface detection point includes a sampling circuit of a fast charging interface detection point 1 and a sampling circuit of a slow charging interface detection point 1. The sampling circuit of the fast charging interface detection point 1 is configured to collect a voltage value of a control pilot circuit of a fast charger of the power supply device. The sampling circuit of the slow charging interface detection point 1 is configured to collect a voltage value of a control pilot circuit of a slow charger of the power supply device.

The sampling circuit of the charging socket interface detection point is configured to collect a voltage value of a control pilot circuit of a charging socket of the power supply device. The sampling circuit of the charging socket interface detection point includes a sampling circuit of a fast charging interface detection point 2 and a sampling circuit of a slow charging interface detection point 2. The sampling circuit of the fast charging interface detection point 2 is configured to collect a voltage value of a control pilot circuit of a fast charging socket of the power supply device. The sampling circuit of the slow charging interface detection point 2 is configured to collect a voltage value of a control pilot circuit of a slow charging socket of the power supply device.

The charger placing detection module is configured to: detect a charger placing status of the charging socket of the power supply device, and when a charger is inserted in the charging socket of the power supply device, determine whether the charger that is inserted in the charging socket of the power supply device is a charger of the power supply device or a charger of another power supply device that charges the power supply device.

It may be understood that the diagram of the system architecture of the power supply device shown in FIG. 2 is merely an example. In some other embodiments of this application, the power supply device may include more or fewer components than those shown in the figure, combine some components, split some components, or have different component arrangements. The components in the figure may be implemented by using hardware, software, or a combination of software and hardware.

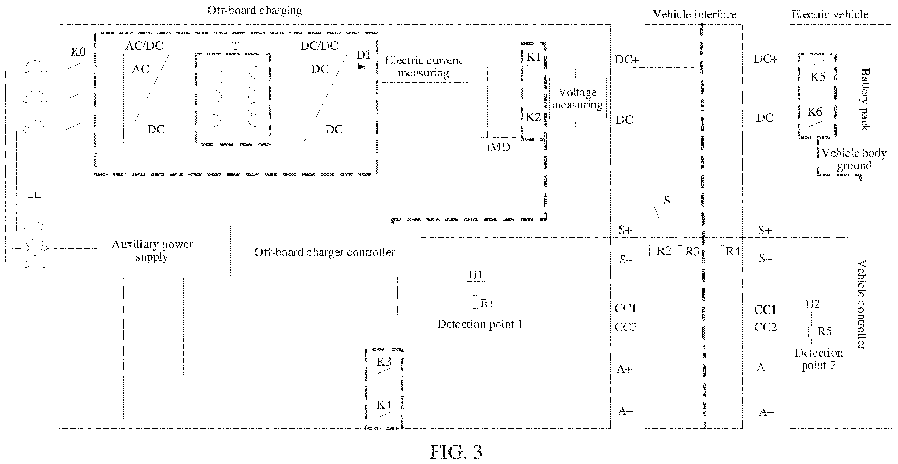

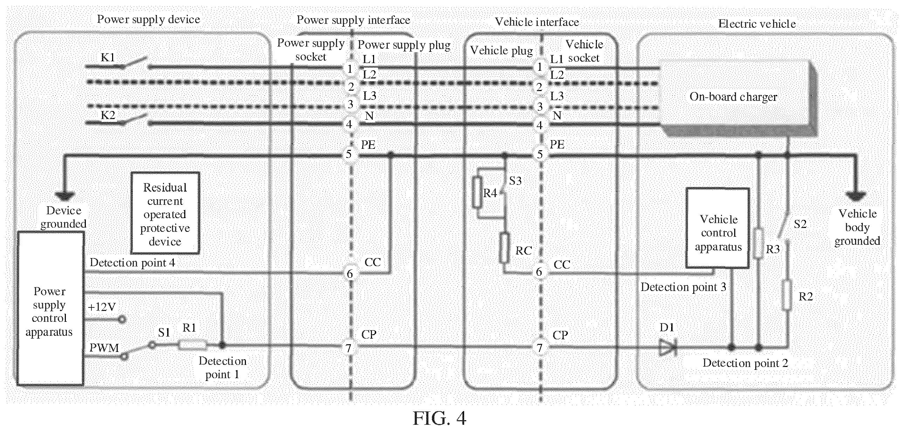

For example, FIG. 3 is a schematic diagram of a control pilot circuit according to an embodiment of this application. As shown in FIG. 3, the control pilot circuit diagram is a direct current charging control pilot circuit diagram, where a detection point 1 is a fast charging interface detection point 1, and a detection point 2 is a fast charging interface detection point 2. FIG. 4 is a schematic diagram of another control pilot circuit according to an embodiment of this application. As shown in FIG. 4, a detection point 1 is a slow charging interface detection point 1, and a detection point 2 is a slow charging interface detection point 2.

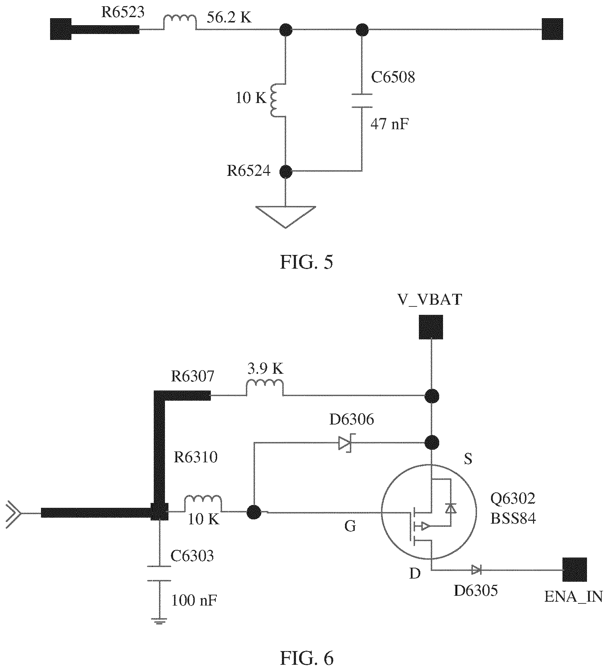

For example, FIG. 5 is a schematic diagram of a sampling circuit of a fast charging interface detection point 1 according to an embodiment of this application. As shown in FIG. 5, the fast charging interface detection point 1 is connected to a leftmost input point, and a first voltage value is output by using a rightmost port. The first voltage value may be processed by a micro control unit (micro control unit, MCU). FIG. 6 is a schematic diagram of a sampling circuit of a fast charging interface detection point 2 according to an embodiment of this application. As shown in FIG. 6, the fast charging interface detection point 2 is connected to a leftmost arrow.

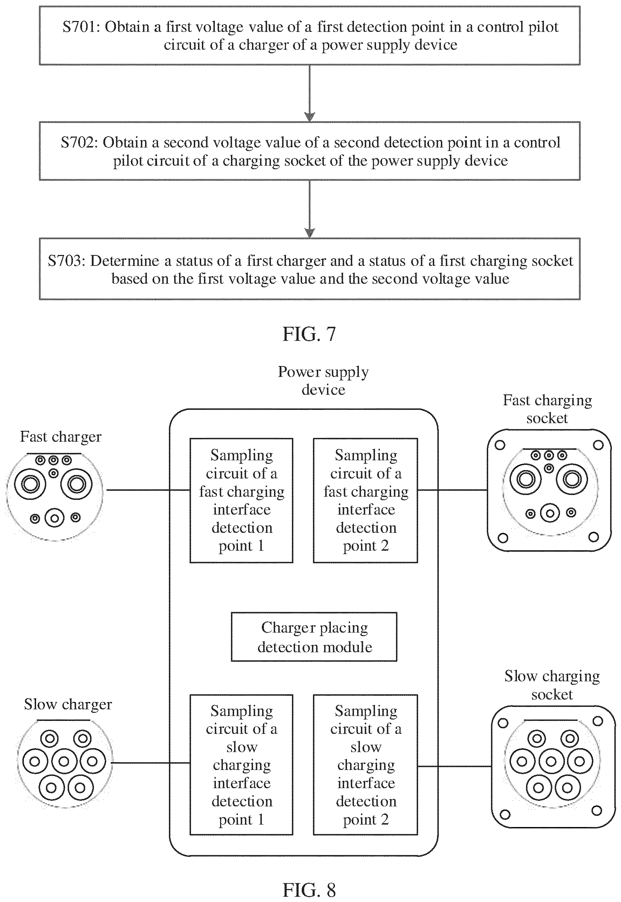

FIG. 7 is a schematic flowchart of a method for detecting a charger placing status of a power supply device according to an embodiment of this application. As shown in FIG. 7, the method includes at least S701 to S703.

S701: Obtain a first voltage value of a first detection point in a control pilot circuit of a charger of the power supply device.

The charger placing status of the power supply device is used to indicate whether a charger is inserted in a charging socket of the power supply device, and further indicate whether the charger that is inserted in the charging socket of the power supply device is the charger of the power supply device or a charger of another power supply device that charges the power supply device.

That the charger is inserted in the charging socket of the power supply device indicates that the charger of the power supply device is connected to the charging socket. The control pilot circuit of the charger is a circuit used for signal transmission or communication between the charger and an electric energy-driving device. The first voltage value of the first detection point in the control pilot circuit of the charger may be obtained based on a sampling circuit of a charger interface detection point shown in FIG. 2.

The first detection point in the control pilot circuit of the charger includes a fast charging interface detection point 1 and a slow charging interface detection point 1.

In a possible implementation, the first voltage value of the first detection point in the control pilot circuit of the charger is obtained based on a sampling circuit of the fast charging interface detection point 1 in the sampling circuit of the charger interface detection point.

In this implementation, the obtained first voltage value is an output voltage value of the fast charging interface detection point 1 in the control pilot circuit of a fast charger of the power supply device.

In another possible implementation, the first voltage value of the first detection point in the control pilot circuit of the charger is obtained based on a sampling circuit of the slow charging interface detection point 1 in the sampling circuit of the charger interface detection point.

In this implementation, the obtained first voltage value is an output voltage value of the slow charging interface detection point 1 in the control pilot circuit of a slow charger of the power supply device.

S702: Obtain a second voltage value of a second detection point in a control pilot circuit of a charging socket of the power supply device.

The control pilot circuit of the charging socket is a circuit used for signal transmission or communication between the charging socket and the another power supply device that charges the power supply device. The second voltage value of the second detection point in the control pilot circuit of the charging socket may be obtained based on a sampling circuit of a charging socket interface detection point shown in FIG. 2.

The second detection point in the control pilot circuit of the charging socket includes a fast charging interface detection point 2 and a slow charging interface detection point 2.

In a possible implementation, the second voltage value of the second detection point in the control pilot circuit of the charging socket is obtained based on a sampling circuit of the fast charging interface detection point 2 in the sampling circuit of the charging socket interface detection point.

In this implementation, the obtained second voltage value is an input voltage value of the fast charging interface detection point 2 in the control pilot circuit of a fast charging socket of the power supply device.

In another possible implementation, the second voltage value of the second detection point in the control pilot circuit of the charging socket is obtained based on a sampling circuit of the slow charging interface detection point 2 in the sampling circuit of the charging socket interface detection point.

In this implementation, the obtained second voltage value is an input voltage value of the slow charging interface detection point 2 in the control pilot circuit of a slow charging socket of the power supply device.

S703: Determine a status of a first charger and a status of a first charging socket based on the first voltage value and the second voltage value.

In a possible implementation, when the first voltage value is equal to a first voltage threshold, and the second voltage value is equal to a second voltage threshold, it is determined that a charger is inserted in the first charging socket and the charger that is inserted in the first charging socket is the first charger.

In an example, the first voltage threshold is a rated voltage value of a control pilot circuit of the first charger, and the second voltage threshold is a rated voltage value of a control pilot circuit of the first charging socket.

In another example, the first voltage threshold is an interval value of the rated voltage value of the control pilot circuit of the first charger within a preset error range. The second voltage threshold is an interval value of the rated voltage value of the control pilot circuit of the first charging socket within a preset error range.

In still another example, the first voltage threshold is any preset value or any preset value interval, and the second voltage threshold is any preset value or any preset value interval.

For example, when the first voltage value is equal to a rated voltage value of the control pilot circuit of the charger, and the second voltage value is equal to a rated voltage value of the control pilot circuit of the charging socket, it is determined that a charger is inserted in the charging socket and the charger that is inserted in the charging socket is the charger of the power supply device.

The rated voltage value of the control pilot circuit of the charger indicates a standard voltage value output by the control pilot circuit of the charger when the charger of the power supply device stably charges the electric energy-driving device for a long period of time. The rated voltage value of the control pilot circuit of the charger includes a rated voltage value of the control pilot circuit of the fast charger and a rated voltage value of the control pilot circuit of the slow charger.

The rated voltage value of the control pilot circuit of the charging socket indicates a standard voltage value input by the control pilot circuit of the charging socket when the another power supply device stably charges, by inserting a charger into the charging socket, the power supply device to which the charging socket belongs for a long period of time. The rated voltage value of the control pilot circuit of the charging socket includes a rated voltage value of the control pilot circuit of the fast charging socket and a rated voltage value of the control pilot circuit of the slow charging socket.

In another possible implementation, when the first voltage value is equal to a third voltage threshold, and the second voltage value is equal to the second voltage threshold, it is determined that a charger is inserted in the first charging socket and the charger that is inserted in the first charging socket is a charger of a device that charges the power supply device.

In an example, the third voltage threshold is a power supply voltage value of the power supply device. The power supply voltage value of the power supply device indicates a standard voltage value provided by the power supply device when the power supply device charges the electric energy-driving device.

In another example, the third voltage threshold is an interval value of the power supply voltage value of the power supply device within a preset error range.

In still another example, the third voltage threshold is any preset value or any preset value interval.

For example, when the first voltage value is equal to the power supply voltage value of the power supply device, and the second voltage value is equal to the rated voltage value of the control pilot circuit of the charging socket of the power supply device, it is determined that a charger is inserted in the charging socket of the power supply device and the charger that is inserted in the charging socket is the charger of the another power supply device that charges the power supply device.

That the charger of the another power supply device that charges the power supply device is inserted in the charging socket of the power supply device indicates that the charger of the another power supply device that charges the power supply device is connected to the charging socket of the power supply device.

In still another possible implementation, when the first voltage value is equal to the third voltage threshold, and the second voltage value is equal to the third voltage threshold, it is determined that no charger is inserted in the first charging socket.

For example, when the first voltage value is equal to the power supply voltage value of the power supply device, and the second voltage value is equal to the power supply voltage value of the power supply device, it is determined that no charger is inserted in the charging socket.

In a possible implementation, when the first voltage value is a first voltage value of the fast charging interface detection point 1 in the control pilot circuit of the fast charger that is obtained based on the sampling circuit of the fast charging interface detection point 1 in the sampling circuit of the charger interface detection point, and the second voltage value is a second voltage value of the fast charging interface detection point 2 in the control pilot circuit of the fast charging socket that is obtained based on the sampling circuit of the fast charging interface detection point 2 in the sampling circuit of the charging socket interface detection point, the first voltage threshold is the rated voltage value of the control pilot circuit of the fast charger, and the second voltage threshold is the rated voltage value of the control pilot circuit of the fast charging socket.

For example, when the first voltage value is equal to the rated voltage value of the control pilot circuit of the fast charger, and the second voltage value is equal to the rated voltage value of the control pilot circuit of the fast charging socket, it is determined that a fast charger is inserted in the fast charging socket of the power supply device and the fast charger that is inserted in the fast charging socket is the fast charger of the power supply device.

For example, when the first voltage value is equal to the power supply voltage value of the power supply device, and the second voltage value is equal to the rated voltage value of the control pilot circuit of the fast charging socket of the power supply device, it is determined that a fast charger is inserted in the fast charging socket of the power supply device and the fast charger that is inserted in the fast charging socket is a fast charger of the another power supply device that charges the power supply device.

For example, when the first voltage value is equal to the power supply voltage value of the power supply device, and the second voltage value is equal to the power supply voltage value of the power supply device, it is determined that no fast charger is inserted in the fast charging socket of the power supply device.

In an example, the rated voltage value of the control pilot circuit of the fast charger is 6 volts (V), the rated voltage value of the control pilot circuit of the fast charging socket is 6 V, and the power supply voltage value of the power supply device is 12 V

In another possible implementation, when the first voltage value is a first voltage value of the slow charging interface detection point 1 in the control pilot circuit of the slow charger that is obtained based on the sampling circuit of the slow charging interface detection point 1 in the sampling circuit of the charger interface detection point, and the second voltage value is a second voltage value of the slow charging interface detection point 2 in the control pilot circuit of the slow charging socket that is obtained based on the sampling circuit of the slow charging interface detection point 2 in the sampling circuit of the charging socket interface detection point, the first voltage threshold is the rated voltage value of the control pilot circuit of the slow charger, and the second voltage threshold is the rated voltage value of the control pilot circuit of the slow charging socket.

For example, when the first voltage value is equal to the rated voltage value of the control pilot circuit of the slow charger, and the second voltage value is equal to the rated voltage value of the control pilot circuit of the slow charging socket, it is determined that a slow charger is inserted in the slow charging socket of the power supply device and the slow charger that is inserted in the slow charging socket is the slow charger of the power supply device.

For example, when the first voltage value is equal to the power supply voltage value of the power supply device, and the second voltage value is equal to the rated voltage value of the control pilot circuit of the slow charging socket of the power supply device, it is determined that a slow charger is inserted in the slow charging socket of the power supply device and the slow charger that is inserted in the slow charging socket is a slow charger of the another power supply device that charges the power supply device.

For example, when the first voltage value is equal to the power supply voltage value of the power supply device, and the second voltage value is equal to the power supply voltage value of the power supply device, it is determined that no slow charger is inserted in the slow charging socket of the power supply device.

In an example, the rated voltage value of the control pilot circuit of the slow charger is 9 V, the rated voltage value of the control pilot circuit of the slow charging socket is 9 V, and the power supply voltage value of the power supply device is 12 V

In addition, when a charger is inserted in the first charging socket and the charger that is inserted in the first charging socket is the first charger, the power supply device is in a sleep state; or when a charger is inserted in the first charging socket and the charger that is inserted in the first charging socket is the charger of the device that charges the power supply device, the power supply device is in a charged state. The sleep state is a low power consumption state in which all unnecessary hardware is disabled.

It should be noted that, when the power supply device includes a plurality of chargers and a plurality of charging sockets that match the plurality of chargers, the foregoing method may be applied to simultaneously detect charger placing statuses of the plurality of charging sockets of the power supply device.

According to the technical solution provided in this application, the charger placing status of the charging socket of the power supply device is detected based on the obtained first voltage value of the first detection point in the control pilot circuit of the charger of the power supply device and the obtained second voltage value of the second detection point in the control pilot circuit of the charging socket of the power supply device. It improves accuracy of detecting the charger placing status of the power supply device.

FIG. 8 is a schematic diagram of a system architecture of another power supply device according to an embodiment of this application. As shown in FIG. 8, the power supply device includes a sampling circuit of a fast charging interface detection point 1, a sampling circuit of a fast charging interface detection point 2, a sampling circuit of a slow charging interface detection point 1, a sampling circuit of a slow charging interface detection point 2, and a charger placing detection module.

The sampling circuit of the fast charging interface detection point 1 is configured to collect a voltage value of a control pilot circuit of a fast charger of the power supply device.

The sampling circuit of the fast charging interface detection point 2 is configured to collect a voltage value of a control pilot circuit of a fast charging socket of the power supply device.

The sampling circuit of the slow charging interface detection point 1 is configured to collect a voltage value of a control pilot circuit of a slow charger of the power supply device.

The sampling circuit of the slow charging interface detection point 2 is configured to collect a voltage value of a control pilot circuit of a slow charging socket of the power supply device.

For the sampling circuit of the fast charging interface detection point 1, refer to the sampling circuit of the fast charging interface detection point 1 shown in FIG. 5. For the sampling circuit of the fast charging interface detection point 2, refer to the sampling circuit of the fast charging interface detection point 2 shown in FIG. 6.

The charger placing detection module is configured to: detect a charger placing status of the fast charging socket and/or the slow charging socket of the power supply device, and when a charger is inserted in the fast charging socket and/or the slow charging socket of the power supply device, determine whether the charger that is inserted in the fast charging socket and/or the slow charging socket of the power supply device is a charger of the power supply device or a charger of another power supply device that charges the power supply device.

It may be understood that the diagram of the system architecture of the power supply device shown in FIG. 8 is merely an example. In some other embodiments of this application, the power supply device may include more or fewer components than those shown in the figure, combine some components, split some components, or have different component arrangements. The components in the figure may be implemented by using hardware, software, or a combination of software and hardware. For example, the power supply device may only include the sampling circuit of the fast charging interface detection point 1, the sampling circuit of the fast charging interface detection point 2, and the charger placing detection module; or may only include the sampling circuit of the slow charging interface detection point 1, the sampling circuit of the slow charging interface detection point 2, and the charger placing detection module. This is not limited in this application.

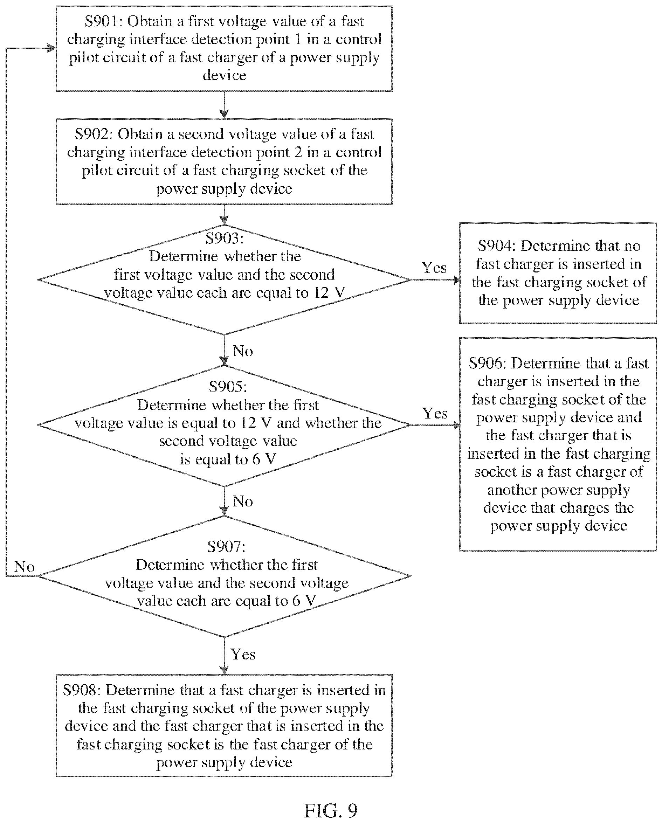

FIG. 9 is a schematic flowchart of a method for detecting a charger placing status of a fast charging socket of a power supply device according to an embodiment of this application. As shown in FIG. 9, the method includes at least S901 to S908.

S901: Obtain a first voltage value of a fast charging interface detection point 1 in a control pilot circuit of a fast charger of the power supply device.

The control pilot circuit of the fast charger of the power supply device is a circuit used for signal transmission or communication between the fast charger of the power supply device and an electric energy-driving device.

In a possible implementation, the first voltage value of the fast charging interface detection point 1 in the control pilot circuit of the fast charger of the power supply device is obtained based on a sampling circuit of the fast charging interface detection point 1 shown in FIG. 8.

S902: Obtain a second voltage value of a fast charging interface detection point 2 in a control pilot circuit of a fast charging socket of the power supply device.

The control pilot circuit of the fast charging socket of the power supply device is a circuit used for signal transmission or communication between the fast charging socket of the power supply device and another power supply device that charges the power supply device.

In a possible implementation, the second voltage value of the fast charging interface detection point 2 in the control pilot circuit of the fast charging socket of the power supply device is obtained based on a sampling circuit of the fast charging interface detection point 2 shown in FIG. 8.

S903: Determine whether the first voltage value and the second voltage value each are equal to 12 V

In a possible implementation, a power supply voltage value of the power supply device is 12 V. The power supply voltage value of the power supply device indicates a standard voltage value provided by the power supply device when the power supply device charges the electric energy-driving device.

If yes, S904 is performed; or if no, S905 is performed.

S904: Determine that no fast charger is inserted in the fast charging socket of the power supply device.

In a possible implementation, when a current first voltage value of the control pilot circuit of the fast charger of the power supply device and a current second voltage value of the control pilot circuit of the fast charging socket of the power supply device each are equal to 12 V, it is determined that no charger is inserted in the fast charging socket of the power supply device.

S905: Determine whether the first voltage value is equal to 12 V and whether the second voltage value is equal to 6 V.

In a possible implementation, the power supply voltage value of the power supply device is 12 V, and a rated voltage value of the control pilot circuit of the fast charging socket of the power supply device is 6 V The rated voltage value of the control pilot circuit of the fast charging socket indicates a standard voltage value input by the control pilot circuit of the fast charging socket when the another power supply device stably charges, by inserting a fast charger into the fast charging socket, the power supply device to which the fast charging socket belongs for a long period of time.

If yes, S906 is performed; or if no, S907 is performed.

S906: Determine that a fast charger is inserted in the fast charging socket of the power supply device and the fast charger that is inserted in the fast charging socket is the fast charger of the another power supply device that charges the power supply device.

In a possible implementation, when the current first voltage value of the control pilot circuit of the fast charger of the power supply device is equal to 12 V, and the current second voltage value of the control pilot circuit of the fast charging socket of the power supply device is equal to 6 V, it is determined that a fast charger is inserted in the fast charging socket of the power supply device and the fast charger that is inserted in the fast charging socket is the fast charger of the another power supply device that charges the power supply device.

S907: Determine whether the first voltage value and the second voltage value each are equal to 6 V.

In a possible implementation, a rated voltage value of the control pilot circuit of the fast charger is 6 V, the rated voltage value of the control pilot circuit of the fast charging socket is 6 V, and the rated voltage value of the control pilot circuit of the fast charger indicates a standard voltage value output by the control pilot circuit of the fast charger when the fast charger of the power supply device stably charges the electric energy-driving device for a long period of time.

If yes, S908 is performed; or if no, S901 is performed.

S908: Determine that a fast charger is inserted in the fast charging socket of the power supply device and the fast charger that is inserted in the fast charging socket is the fast charger of the power supply device.

When the current first voltage value of the control pilot circuit of the fast charger of the power supply device is equal to 6 V, and the current second voltage value of the control pilot circuit of the fast charging socket of the power supply device is equal to 6 V, it is determined that a fast charger is inserted in the fast charging socket of the power supply device and the fast charger that is inserted in the fast charging socket is the fast charger of the power supply device.

According to the technical solution provided in this application, the charger placing status of the fast charging socket of the power supply device is detected based on the obtained first voltage value of the fast charging interface detection point 1 in the control pilot circuit of the fast charger of the power supply device and the obtained second voltage value of the fast charging interface detection point 2 in the control pilot circuit of the fast charging socket of the power supply device. It improves accuracy of detecting the charger placing status of the fast charging socket of the power supply device.

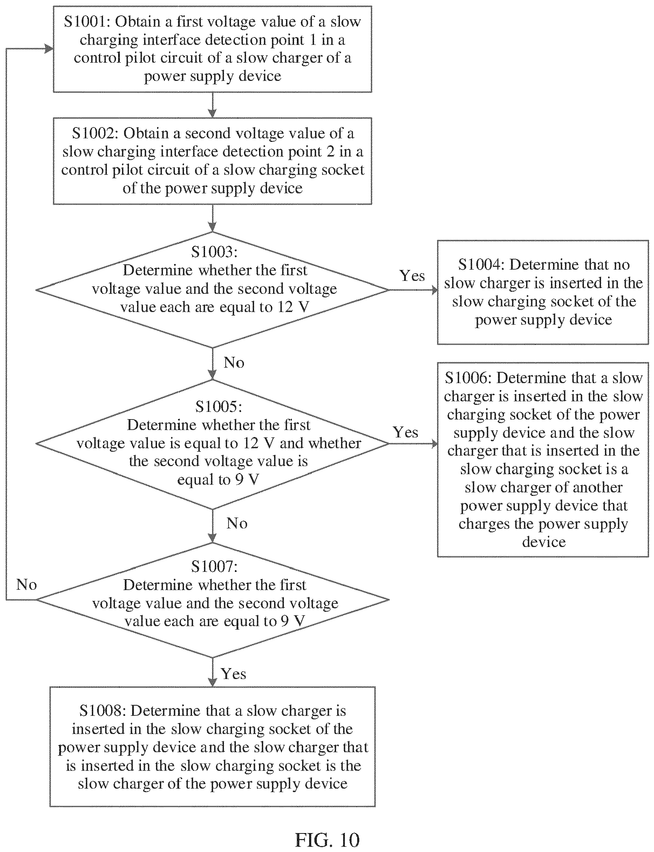

FIG. 10 is a schematic flowchart of a method for detecting a charger placing status of a slow charging socket of a power supply device according to an embodiment of this application. As shown in FIG. 10, the method includes at least S1001 to S1008.

S1001: Obtain a first voltage value of a slow charging interface detection point 1 in a control pilot circuit of a slow charger of the power supply device.

The control pilot circuit of the slow charger of the power supply device is a circuit used for signal transmission or communication between the slow charger of the power supply device and an electric energy-driving device.

In a possible implementation, the first voltage value of the slow charging interface detection point 1 in the control pilot circuit of the slow charger of the power supply device is obtained based on a sampling circuit of the slow charging interface detection point 1 shown in FIG. 8.

S1002: Obtain a second voltage value of a slow charging interface detection point 2 in a control pilot circuit of a slow charging socket of the power supply device.

The control pilot circuit of the slow charging socket of the power supply device is a circuit used for signal transmission or communication between the slow charging socket of the power supply device and another power supply device that charges the power supply device.

In a possible implementation, the second voltage value of the slow charging interface detection point 2 in the control pilot circuit of the slow charging socket of the power supply device is obtained based on a sampling circuit of the slow charging interface detection point 2 shown in FIG. 8.

51003: Determine whether the first voltage value and the second voltage value each are equal to 12 V.

In a possible implementation, a power supply voltage value of the power supply device is 12 V. The power supply voltage value of the power supply device indicates a standard voltage value provided by the power supply device when the power supply device charges the electric energy-driving device.

If yes, S1004 is performed; or if no, S1005 is performed.

S1004: Determine that no slow charger is inserted in the slow charging socket of the power supply device.

In a possible implementation, when the first voltage value of the slow charging interface detection point 1 in the control pilot circuit of the slow charger of the power supply device and the second voltage value of the slow charging interface detection point 2 in the control pilot circuit of the slow charging socket of the power supply device each are equal to 12 V, it is determined that no slow charger is inserted in the slow charging socket of the power supply device.

S1005: Determine whether the first voltage value is equal to 12 V and whether the second voltage value is equal to 9 V.

In a possible implementation, the power supply voltage value of the power supply device is 12 V, and a rated voltage value of the control pilot circuit of the slow charging socket of the power supply device is 9 V The rated voltage value of the control pilot circuit of the slow charging socket indicates a standard voltage value input by the control pilot circuit of the slow charging socket when the another power supply device stably charges, by inserting a slow charger into the slow charging socket, the power supply device to which the slow charging socket belongs for a long period of time.

If yes, S 1006 is performed; or if no, S1007 is performed.

S 1006: Determine that a slow charger is inserted in the slow charging socket of the power supply device and the slow charger that is inserted in the slow charging socket is the slow charger of the another power supply device that charges the power supply device.

In a possible implementation, when the first voltage value of the slow charging interface detection point 1 in the control pilot circuit of the slow charger of the power supply device is equal to 12 V, and the second voltage value of the slow charging interface detection point 2 in the control pilot circuit of the slow charging socket of the power supply device is equal to 9 V, it is determined that a slow charger is inserted in the slow charging socket of the power supply device and the slow charger that is inserted in the slow charging socket is the slow charger of the another power supply device that charges the power supply device.

S1007: Determine whether the first voltage value and the second voltage value each are equal to 9 V.

In a possible implementation, a rated voltage value of the control pilot circuit of the slow charger is 9 V, the rated voltage value of the control pilot circuit of the slow charging socket is 9 V, and the rated voltage value of the control pilot circuit of the slow charger indicates a standard voltage value output by the control pilot circuit of the slow charger when the slow charger of the power supply device stably charges the electric energy-driving device for a long period of time.

If yes, S 1008 is performed; or if no, S 1001 is performed.

S1008: Determine that a slow charger is inserted in the slow charging socket of the power supply device and the slow charger that is inserted in the slow charging socket is the slow charger of the power supply device.

When the first voltage value of the slow charging interface detection point 1 in the control pilot circuit of the slow charger of the power supply device is equal to 9 V, and the second voltage value of the slow charging interface detection point 2 in the control pilot circuit of the slow charging socket of the power supply device is equal to 9 V, it is determined that a slow charger is inserted in the slow charging socket of the power supply device and the slow charger that is inserted in the slow charging socket is the slow charger of the power supply device.

According to the technical solution provided in this application, the charger placing status of the slow charging socket of the power supply device is detected based on the obtained first voltage value of the slow charging interface detection point 1 in the control pilot circuit of the slow charger of the power supply device and the obtained second voltage value of the slow charging interface detection point 2 in the control pilot circuit of the slow charging socket of the power supply device. It improves accuracy of detecting the charger placing status of the slow charging socket of the power supply device.

It should be noted that, when the power supply device includes not only the fast charger and the fast charging socket, but also the slow charger and the slow charging socket, the charger placing status of the fast charging socket may be first detected according to the method shown in FIG. 9, and then the charger placing status of the slow charging socket is detected according to the method shown in FIG. 10. Alternatively, the charger placing status of the slow charging socket may be first detected according to the method shown in FIG. 10, and then the charger placing status of the fast charging socket may be detected according to the method shown in FIG. 9. Alternatively, the charger placing status of the fast charging socket and the charger placing status of the slow charging socket may be simultaneously detected according to the methods shown in FIG. 9 and FIG. 10. This is not limited in this application.

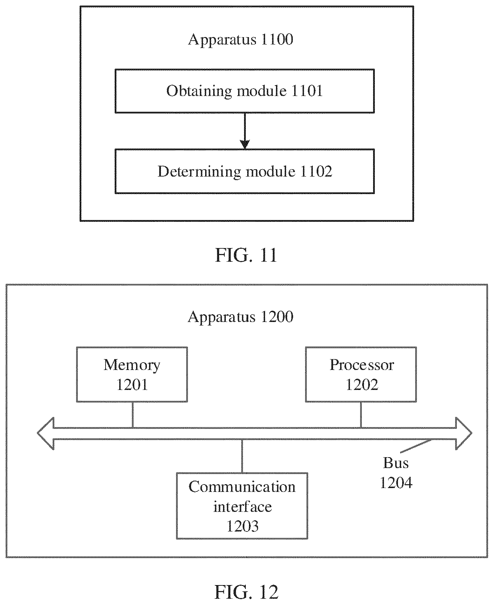

FIG. 11 is a schematic diagram of a structure of an apparatus for detecting a charger placing status of a power supply device according to an embodiment of this application. As shown in FIG. 11, the apparatus 1100 may include an obtaining module 1101 and a determining module 1102.

In a possible implementation, the apparatus 1100 may be configured to implement the method shown in FIG. 7. For example, the obtaining module 1101 is configured to implement S701 and S702, and the determining module 1102 is configured to implement S703.

In another possible implementation, the apparatus 1100 further includes a judging module. The apparatus 1100 in this implementation may be configured to implement the method shown in FIG. 9. For example, the obtaining module 1101 is configured to implement S901 and S902, the determining module 1102 is configured to implement S904, S906, and S908, and the judging module is configured to implement S903, S905, and S907.

In still another possible implementation, the apparatus 1100 further includes a judging module. The apparatus 1100 in this implementation may be configured to implement the method shown in FIG. 10. For example, the obtaining module 1101 is configured to implement S1001 and S1002, the determining module 1102 is configured to implement S1004, S1006, and S1008, and the judging module is configured to implement S1003, S1005, and S1007.

FIG. 12 is a schematic diagram of a structure of an apparatus for detecting a charger placing status of a power supply device according to another embodiment of this application.

As shown in FIG. 12, an apparatus 1200 in this embodiment includes a memory 1201, a processor 1202, a communication interface 1203, and a bus 1204. A communication connection between the memory 1201, the processor 1202, and the communication interface 1203 is implemented through the bus 1204.

The memory 1201 may be a read-only memory (read only memory, ROM), a static storage device, a dynamic storage device, or a random access memory (random access memory, RAM). The memory 1201 may store a program. When the program stored in the memory 1201 is executed by the processor 1202, the processor 1202 may be configured to perform the steps in the methods shown in FIG. 7, FIG. 9, and FIG. 10.

The processor 1202 may be a general-purpose central processing unit (central processing unit, CPU), a microprocessor, an application-specific integrated circuit (application-specific integrated circuit, ASIC), or one or more integrated circuits. The processor 1202 is configured to execute a related program, to implement the method for detecting a charger placing status of a power supply device in the method embodiments of this application.

The processor 1202 may alternatively be an integrated circuit chip and has a signal processing capability. In an implementation process, each step in the method in each embodiment of this application may be implemented by using a hardware integrated logic circuit in the processor 1202, or instructions in a form of software.

The processor 1202 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor 1202 may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed by a hardware decoding processor, or may be performed by a combination of hardware and software modules in a decoding processor. The software module may be located in a mature storage medium in the field, such as a random access memory, a flash memory, a read-only memory, a programmable read-only memory, an electrically erasable programmable memory, or a register. The storage medium is located in the memory 1201. The processor 1202 reads information from the memory 1201, and completes, in combination with hardware of the processor 1202, functions that need to be performed in the methods in embodiments of this application. For example, the processor 1202 may perform the steps/functions in embodiments shown in FIG. 7, FIG. 9, and FIG. 10.

The communication interface 1203 may use, but not limited to, a transceiver apparatus such as a transceiver to implement communication between the apparatus 1200 and another device or a communication network.

The bus 1204 may include a path for information transfer between various components (for example, the memory 1201, the processor 1202, and the communication interface 1203) of the apparatus 1200.

It should be understood that the apparatus 1200 shown in this embodiment of this application may be an electronic device, or may be a chip configured in an electronic device.

It should be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By example but not by limitation, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware, firmware, or any other combinations. When the software is used to implement embodiments, all or a part of the foregoing embodiments may be implemented in a form of a computer program product. The computer program product includes one or more computer instructions or computer programs. When the computer instructions or computer programs are loaded or executed on a computer, the procedure or functions according to embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, such as a server or a data center, including one or more usable media sets. The usable medium may be a magnetic medium (for example, a floppy disk, a hard disk drive, or a magnetic tape), an optical medium (for example, a DVD), or a semiconductor medium. The semiconductor medium may be a solid state drive.

It should be understood that the term "and/or" in this specification describes only an association relationship between associated objects and represents that three relationships may exist. For example, A and/or B may represent the following three cases: Only A exists, both A and B exist, or only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, and c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes. The sequence numbers of the foregoing processes should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may have another manner for division in actual implementation. For example, a plurality of units or components may be combined or integrated into another system, or some features may be ignored or not performed. In addition, displayed or discussed mutual couplings or direct couplings or communication connections may be implemented by using some interfaces. Indirect couplings or communication connections between apparatuses or units may be implemented in an electronic, a mechanical, or another form.

Units described as separate components may or may not be physically separate. Components displayed as units may or may not be physical units, may be located in one position, or may be distributed on a plurality of network units. Some or all units may be selected based on an actual requirement to achieve objectives of the solutions of embodiments.

In addition, functional units in embodiments of this application may be integrated into one processing unit, or each of the units may physically and separately exist, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to conventional technologies, or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that may store program code, such as a USB flash drive, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to protection scope of the claims.

## Claims

1. A method for detecting a charger placing status of a power supply device, wherein the power supply device comprises a first charger and a first charging socket, and the method comprises:
obtaining a first voltage value of a first detection point in a control pilot circuit of the first charger;
obtaining a second voltage value of a second detection point in a control pilot circuit of the first charging socket; and
determining a status of the first charger and a status of the first charging socket based on the first voltage value and the second voltage value.

2. The method according to claim 1, wherein the method further comprises:
when the first voltage value is equal to a first voltage threshold, and the second voltage value is equal to a second voltage threshold, determining that a charger is inserted in the first charging socket and the charger that is inserted in the first charging socket is the first charger.

3. The method according to claim 1 or 2, wherein the method further comprises:
when the first voltage value is equal to a third voltage threshold, and the second voltage value is equal to the second voltage threshold, determining that a charger is inserted in the first charging socket and the charger that is inserted in the first charging socket is a charger of a device that charges the power supply device.

4. The method according to any one of claims 1 to 3, wherein the method further comprises:
when the first voltage value is equal to the third voltage threshold, and the second voltage value is equal to the third voltage threshold, determining that no charger is inserted in the first charging socket.

5. The method according to any one of claims 1 to 4, wherein the method further comprises:
obtaining the first voltage value based on a sampling circuit of a fast charging interface detection point 1; and
obtaining the second voltage value based on a sampling circuit of a fast charging interface detection point 2.

6. The method according to claim 5, wherein the first voltage threshold is a rated voltage value of a control pilot circuit of a fast charger, and the second voltage threshold is a rated voltage value of a control pilot circuit of a fast charging socket.

7. The method according to any one of claims 1 to 4, wherein the method further comprises:
obtaining the first voltage value based on a sampling circuit of a slow charging interface detection point 1; and
obtaining the second voltage value based on a sampling circuit of a slow charging interface detection point 2.

8. The method according to claim 7, wherein the first voltage threshold is a rated voltage value of a control pilot circuit of a slow charger, and the second voltage threshold is a rated voltage value of a control pilot circuit of a slow charging socket.

9. The method according to any one of claims 1 to 8, wherein the method further comprises:
when a charger is inserted in the first charging socket and the charger that is inserted in the first charging socket is the first charger, the power supply device is in a sleep state.

10. The method according to any one of claims 1 to 9, wherein the method further comprises:
when a charger is inserted in the first charging socket and the charger that is inserted in the first charging socket is the charger of the device that charges the power supply device, the power supply device is in a charged state.

11. An apparatus for detecting a charger placing status of a power supply device, wherein the apparatus comprises an obtaining module and a determining module, wherein
the obtaining module is configured to obtain a first voltage value of a first detection point in a control pilot circuit of a first charger;
the obtaining module is further configured to obtain a second voltage value of a second detection point in a control pilot circuit of a first charging socket; and
the determining module is configured to determine a status of the first charger and a status of the first charging socket based on the first voltage value and the second voltage value.

12. The apparatus according to claim 11, wherein the determining module is specifically configured to:
when the first voltage value is equal to a first voltage threshold, and the second voltage value is equal to a second voltage threshold, determine that a charger is inserted in the first charging socket and the charger that is inserted in the first charging socket is the first charger.

13. The apparatus according to claim 11 or 12, wherein the determining module is specifically configured to:
when the first voltage value is equal to a third voltage threshold, and the second voltage value is equal to the second voltage threshold, determine that a charger is inserted in the first charging socket and the charger that is inserted in the first charging socket is a charger of a device that charges the power supply device.

14. The apparatus according to claims 11 to 13, wherein the determining module is specifically configured to:
when the first voltage value is equal to the third voltage threshold, and the second voltage value is equal to the third voltage threshold, determine that no charger is inserted in the first charging socket.

15. The apparatus according to any one of claims 11 to 14, wherein the obtaining module is specifically configured to:
obtain the first voltage value based on a sampling circuit of a fast charging interface detection point 1; and
obtain the second voltage value based on a sampling circuit of a fast charging interface detection point 2.

16. The apparatus according to claim 15, wherein the first voltage threshold is a rated voltage value of a control pilot circuit of a fast charger, and the second voltage threshold is a rated voltage value of a control pilot circuit of a fast charging socket.

17. The apparatus according to any one of claims 11 to 14, wherein the obtaining module is specifically configured to:
obtain the first voltage value based on a sampling circuit of a slow charging interface detection point 1; and
obtain the second voltage value based on a sampling circuit of a slow charging interface detection point 2.

18. The apparatus according to claim 17, wherein the first voltage threshold is a rated voltage value of a control pilot circuit of a slow charger, and the second voltage threshold is a rated voltage value of a control pilot circuit of a slow charging socket.

19. The apparatus according to any one of claims 11 to 18, wherein when a charger is inserted in the first charging socket and the charger that is inserted in the first charging socket is the first charger, the power supply device is in a sleep state.

20. The apparatus according to any one of claims 11 to 19, wherein when a charger is inserted in the first charging socket and the charger that is inserted in the first charging socket is the charger of the device that charges the power supply device, the power supply device is in a charged state.

21. An apparatus for detecting a charger placing status of a power supply device, comprising a memory and a processor, wherein
the memory is configured to store program instructions; and
the processor is configured to invoke the program instructions in the memory, to perform the method according to any one of claims 1 to 10.

22. A power supply device, comprising a charger, a charging socket, and the detection apparatus according to any one of claims 11 to 20.

23. A chip, comprising at least one processor and a communication interface, wherein the communication interface and the at least one processor are interconnected through a line, and the at least one processor is configured to run a computer program or instructions to perform the method according to any one of claims 1 to 10.

24. A computer-readable medium, wherein the computer-readable medium stores computer-executable program code, and the program code comprises instructions used to perform the method according to any one of claims 1 to 10.

25. A computer program product, wherein the computer program product comprises instructions, and when the instructions are executed, a computer is enabled to perform the method according to any one of claims 1 to 10.
